# EUROPEAN PATENT APPLICATION

(11) **EP 4 755 862 A1**
(43) Date of publication of application: **10.06.2026**
(21) Application number: 25179514.2
(22) Date of filing: 28.05.2025
(51) Int. Cl.: C04B 7/153, C04B 7/17, C04B 7/21, C04B 28/08

(54) **HYDRAULIC BINDER COMPOSITION**

(30) Priority: 09.12.2024 IT 202400027963
(71) Applicant: Opigeo S.r.l., 35138 Padova (PD) (IT)
(72) Inventor: BELLOTTO, Maurizio, 20144 Milano (MI) (IT); GATTA, Marco, 38123 Trento (TN) (IT)
(74) Representative: Caldon, Giuliano

(57) **Abstract**

Hydraulic binder composition, which comprises steel slag or a mixture consisting of steel slag and calcium carbonate, and at least one modifier additive, modifying the setting reaction of said steel slag, in a quantity between 0.1 and 20% by weight with respect to the weight of the steel slag.

## Description

### Field of application

The present invention relates to a hydraulic binder composition, according to the preamble of independent claim no. 1.

The hydraulic binder composition is advantageously intended for use in the field of civil engineering, for example of the building or road type.

More in particular, the hydraulic binder composition is made starting from a steel slag preferably derived from secondary steel metallurgy processes, such as in particular white steel slag. More in particular, the present composition can be used as a recovery and re-enhancement process for steel slag.

Therefore, the hydraulic binder composition falls within the industrial field of the production of raw materials for civil engineering, and more specifically into the industrial field of the production of raw materials usable in the formulation of hydraulic binders, preferably as alternatives to common Portland cement.

### State of the art

The term hydraulic binder refers to an inorganic material that, when mixed with water, is subject to a hydration reaction to form a paste, which is initially deformable and workable and which gradually hardens, both in air and in water, until it assumes high mechanical resistance properties. This property is due to the formation of hydrated, insoluble or poorly soluble compounds, starting from silicates, aluminates and calcium ferrites present in the binder.

The hydraulic binder is therefore susceptible to being used in the construction of objects and structures intended for civil use such as building, geotechnical, infrastructural, hydraulic, structural and urban planning works in general.

The most common hydraulic binder is Portland cement, which when mixed with water forms a cement paste known in the technical jargon of the field as "grout".

Portland cement is obtained by grinding the firing product of a mixture of clay and limestone (clinker) with small additions of gypsum, in which the gypsum plays the role of hydration reaction regulator.

In more detail, the Portland cement production process comprises a mixing and grinding step of the raw materials, consisting of clay and limestone, a firing step, using a fuel burner at a temperature of approximately 1450°C, from which the clinker is obtained in the form of centimeter-sized granules.

The clinker is then cooled, mixed with gypsum (as described above) and then ground, to obtain Portland cement, which is then mixable with water to allow the hydration reaction and enable the use of Portland cement as a hydraulic binder as briefly described above.

The use of Portland cement as a hydraulic binder has proven to be not free from drawbacks, in practice.

The main drawback is that this production process, in addition to requiring significant energy consumption (for the two grinding steps and for the firing step), produces during the firing step, through the clinker reactions and the fuel burner, a high quantity of greenhouse gases, and in particular carbon dioxide.

It is now well established that the production of Portland cement is one of the main causes of greenhouse gas emissions (and in particular carbon dioxide) on a global level. In particular, most of the aforesaid carbon dioxide (CO₂) produced derives from the clinker production processes (necessary for the subsequent production of the cement-based hydraulic binder), both due to the calcination reactions of the limestone and the combustion of fossil fuels. It is estimated that the production of one ton of clinker produces a quantity of carbon dioxide (CO₂) equal to 862 kg.

At the same time, there is a strong need in the field to find ways to reuse inert waste materials deriving from the iron and steel production processes, i.e., blast furnace or steel slag.

The latter, in fact, are produced in large quantities and mostly disposed of in landfill or used as fillers for building materials, and yet they represent a potential resource that is currently not exploited.

Therefore, in order to at least partially solve the problem of greenhouse gas emissions during the production of Portland cement and find an alternative use for the aforesaid slag, alternative hydraulic binders based on slag and involving a limited use of clinker have been developed.

For example, materials (used alone or in combination) based on granulated and ground blast furnace slag, metakaolin and fly ash are known, which are mixed with an alkaline activator (for example a solution of sodium or potassium hydroxide and/or silicate). The use of granulated and ground blast furnace slag (also known as GGBS) has made it possible to obtain binders with high chemical strength and good mechanical properties. In particular, granulated and ground blast furnace slag is obtained through a grinding process of rapidly cooled blast furnace slag, which is obtained from the production of cast iron.

Such blast furnace slag can also be mixed with a variable quantity of Portland cement, in order to improve the mechanical properties of the mixture.

In particular, hydraulic binders made from granulated and ground blast furnace slag with the addition of a Portland cement mixture are commonly known in the field as "blast furnace cement" and indicated with the acronym CEM-III.

The aforesaid alternative hydraulic binders to Portland cement have also proven to be not free from drawbacks, in practice.

A first drawback is that the mechanical properties of these binders are not as satisfactory as those of common Portland cement and can decrease by up to approximately 20% with respect to the strength of the latter.

A further drawback is that blast furnace slag (from which granulated blast furnace slag is obtained) can only be obtained as a by-product of the cast iron production process and the quantity produced is closely related to the demand for cast iron, making it difficult to establish a supply-demand market in which blast furnace slag is produced independently of cast iron production.

Therefore, since Portland cement is still advantageous from both an economic point of view and from the point of view of ease of obtaining the raw material, over the years alternative hydraulic binders to Portland cement have not found sufficient use to justify economic investments destined for research and development and the design of dedicated plants.

Furthermore, unlike binders based on blast furnace slag, there are still no satisfactory hydraulic binders that involve the use of steel slag, as it consists of highly reactive phases, such as tricalcium aluminate, mayenite, hatrurite, larnite, calcium oxide, magnesium oxide.

**In** fact, the main drawback of white slag lies in the fact that the reactive phases that compose it, when mixed with water, hydrate very rapidly with strong heat development, and the paste consisting of the binder mixed with water hardens, losing the ability to be tangibly deformed. However, the hardened material does not acquire mechanical strength properties, and indeed cracks and fractures during curing and aging due to the transformation of the metastable hydrates initially formed in the thermodynamically stable phases.

Therefore, the aforesaid drawbacks have meant that in the field of construction, and in particular that of building, alternative hydraulic binders have not found wide use.

### Presentation of the invention

**In** this situation, the problem underlying the present invention is to eliminate the drawbacks of the above-mentioned prior art, by providing a hydraulic binder composition, which allows to obtain products with high mechanical performance, comparable to common Portland cement.

A further object of the present invention is to provide a hydraulic binder composition which allows the use of Portland cement to be avoided or replaced.

A further object of the present invention is to provide a hydraulic binder composition which allows the recovery of waste materials from steel-making processes, in particular steel slag, destined for landfill disposal.

A further object of the present invention is to provide a hydraulic binder composition which is an alternative to the compositions currently known in the art.

A further object of the present invention is to provide a hydraulic binder composition which is simple and economical to produce.

A further object of the present invention is to provide a hydraulic binder composition which has a low environmental impact.

### Brief description of the drawings

The technical features of the invention, according to the aforesaid objects, can be clearly seen from the contents of the claims set out below and the advantages thereof will become more evident in the detailed description which follows, made with reference to the attached drawings, which represent some purely exemplifying and non-limiting embodiments thereof, in which:
- Figure 1 shows an image depicting an example grain size distribution of a ground ladle steel slag;
- Figure 2 shows an image depicting an example grain size distribution of ground calcium carbonate.

### Detailed description of a preferred embodiment example

The hydraulic binder composition of the present invention can be used for building materials as an alternative to current Portland cement-based hydraulic binders.

In a manner known per se, the hydraulic binder formulated with the composition according to the invention can be advantageously used to make objects (for example in the field of construction) and can be mixed for this purpose with water and with aggregates (coarse or fine), for example gravel and/or sand, to obtain a mortar or concrete.

According to the idea underlying the present invention, the hydraulic binder composition comprises steel slag or a mixture consisting of steel slag and calcium carbonate.

More specifically, the term "steel slag" will hereinafter preferably be understood as a by-product obtained from metallurgical processes, and preferably from secondary metallurgical processes for steel refining.

Advantageously, the steel slag is ladle steel slag, colloquially called "white" slag, which is preferably obtained from the ladle furnace following steel refining processes.

In particular, the ladle steel slag is selected from: steel slag from the refining and deoxidation process of silicon-killed steel, steel slag from the refining and deoxidation process of aluminum-killed steel, and mixtures thereof.

Obviously, without departing from the scope of protection of the present invention, the steel slag used can be of different types, for example "black" slag, preferably obtained from an electric furnace (electric arc smelting furnace), or slag, preferably obtained from an electric furnace (electric arc smelting furnace), or slag obtained from the steel conversion and decarburization process in an oxygen furnace (basic oxygen furnace).

It is also possible to use a steel slag obtained by mixing two or more slags. Advantageously, the steel slag used comprises a combination of calcium oxide (CaO), silicon oxide (SiO₂) and aluminum oxide (Al₂O₃), which is in a quantity greater than or equal to 60% with respect to the weight of the entire steel slag used.

Preferably, the sum of the quantities of calcium oxide (CaO), silicon oxide (SiO₂) and aluminum oxide (Al₂O₃) within the steel slag is greater than or equal to 75% with respect to the weight of the entire steel slag used.

According to the preferred formulation of steel slag used, it comprises a quantity of calcium oxide (CaO), silicon oxide (SiO₂) and aluminum oxide (Al₂O₃) whose sum is between 85 and 90% of the total weight of the steel slag.

Advantageously, the amount of calcium oxide (CaO) present within the steel slag is greater than or equal to 30%, and preferably at least greater than or equal to 45%, with respect to the total weight of the steel slag.

Advantageously, furthermore, the sum of the quantity of calcium oxide (CaO) and one of silicon oxide (SiO₂) and aluminum oxide (Al₂O₃) is greater than or equal to 50%, and preferably greater than or equal to 70%.

Furthermore, the steel slag used advantageously comprises iron oxides in a quantity less than or equal to 15% with respect to the weight of the entire slag, preferably less than 10% and even more preferably less than 5%. Preferably, the steel slag is deferrized, meaning it contains no iron or iron oxides, or only traces thereof (where the iron oxide content is less than 1%).

In more detail, the term "iron oxides" will preferably be used hereinafter to refer to the sum of all the iron oxides present within the aforesaid steel slag, such as Wustite (FeO), Hematite (Fe₂O₃), Magnetite (Fe₃O₄) and the metallic iron whose content is expressed in the form of oxide.

Advantageously, steel slag has a general mineralogical composition of the type shown in Table 1A, where the preferable compositional range of each element is given in the "Preferential range" column.

Table 1B instead shows two examples of compositions of ladle steel slag resulting from the refining and deoxidation process of a steel killed with aluminum and from the refining and deoxidation process of a steel killed with silicon, respectively.

Preferably, the steel slag used also comprises magnesium oxide (MgO), in an amount less than 20%, and preferably in an amount between 3% and 10%.

Advantageously, the steel slag used comprises one or more of the following metal oxides: sodium oxide (Na₂O), potassium oxide (K₂O), titanium oxide (TiO₂), manganese oxide (MnO) which are preferably present in small quantities (in particular with percentages lower than 5% with respect to the total weight of the slag). Advantageously, the slag can also comprise further components in the form of elements, oxides or compounds such as phosphorus, chromium and sulfur, which are preferably present in trace form (with percentages lower than 1% with respect to the total weight of the slag).

**Table 1A - Generic preferential steel slag composition**

| **Oxide** | **Preferential range [%]** |
|---|---|
| Silicon oxide (SiO₂) | 2-35 |
| Calcium Oxide (CaO) | 30-60 |
| Aluminum oxide (Al ₂O₃) | 5-35 |
| Magnesium Oxide (MgO) | 1-18 |
| Hematite (Fe₂O₃) | 0.1-15 |
| Sodium oxide (Na₂O) | 0-5 |
| Potassium oxide (K₂O) | 0-5 |
| Titanium oxide (TiO₂) | 0-5 |
| Manganese oxide (MnO) | 0-5 |
| Potassium | 0.1-0.4 |
| Sulfur | 0.1-1 |
| Chrome | 0-0.5 |

**Table 1B - Examples of steel slag composition**

| **Oxide** | **Al-killed steel slag [%]** | **Si-killed steel slag [%]** |
|---|---|---|
| SiO₂ | 11.89 | 23.83 |
| TiO₂ | 0.16 | 0.79 |
| Al₂O₃ | 25.08 | 13.88 |
| Fe₂O₃ | 2.38 | 0.61 |
| MnO | 0.16 | 0.39 |
| MgO | 6.99 | 7.29 |
| CaO | 48.14 | 52.07 |
| Na₂O | 0.79 | 0.00 |
| K₂O | 0.79 | 0.00 |
| P₂O₅ | 0.01 | 0.00 |
| Total | 96.39 | 98.86 |
| L.O.I. | 0.51 | 0.1 |

| **Element** | **Al-killed steel slag [ppm]** | **Si-killed steel slag [ppm]** |
|---|---|---|
| F* | - | 972 |
| Cl* | 186 | - |
| S | 10640 | 10395 |
| Sc | 108 | 88 |
| V | 59 | 17 |
| Cr | 341 | 361 |
| Co | 10 | <3 |
| Ni | 6 | <3 |
| Cu | 37 | 17 |
| Zn | 304 | 81 |
| Ga | 7 | <3 |
| Rb | <3 | <3 |
| Sr | 9429 | 182 |
| Y | 8 | 6 |
| Zr | 1701 | 61 |
| Nb | 28 | 9 |
| Sb* | 250 | - |
| Ba | 12042 | 141 |
| La | 19 | <10 |
| Ce | 27 | 20 |
| Nd | 208 | 21 |
| Pb | 1418 | 4 |
| Th | <5 | <3 |
| U | <3 | <3 |
| * Elements determined by standardless analysis | | |

Advantageously, steel slag has a mineralogical composition of the type depicted in Table 2, and more specifically preferably comprises Mayenite (C₁₂A₇), Celite, or tricalcium aluminate, (C₃A) Hatrurite (C₃S), Quartzite (SiO₂) and Portlandite (Ca(OH)₂).

Advantageously, the steel slag also comprises one or more of the following minerals: Larnite (β-C₂S), Ca-Olivine (γC₂S), Gehlenite (C₂AS), Merwinite (C₃MS₂), Periclase (MgO) and Perovskite.

Advantageously, the steel slag is ground to a D90 grain size of less than 150 µm, preferably less than 100 µm.

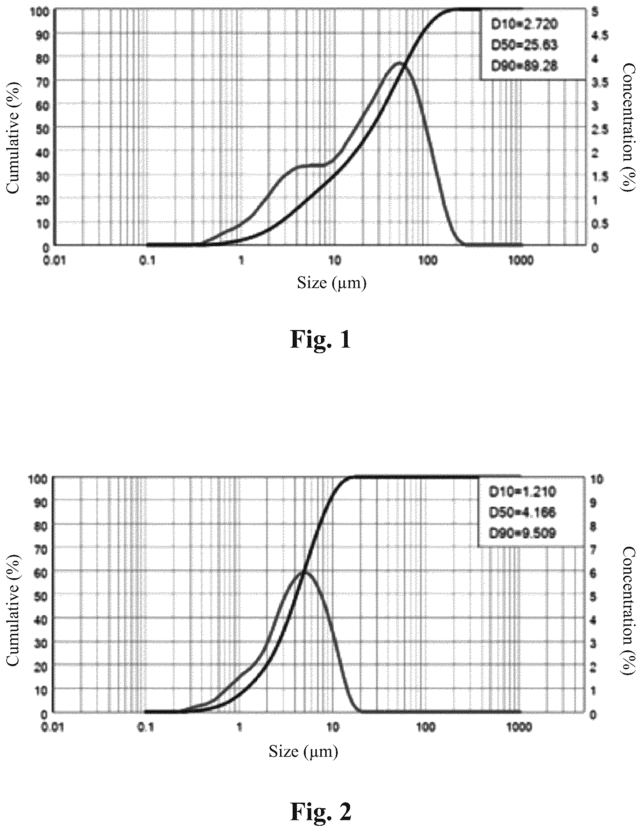

For example, the ladle steel slag can have the grain size distribution shown in the image of Figure 1.

**Table 2 - Mineralogical phases of steel slag (the compositions of the aluminates and calcium silicates are expressed using the terminology used in the cement industry).**

| **Phase** | **Preferential range [%]** |
|---|---|
| Mayenite (C₁₂A₇) | 10-50 |
| Tricalcium aluminate (C₃A) | 0-50 |
| Hatrurite (C₃S) | 0-30 |
| Larnite (β-C₂S) | 0-40 |
| Quarzite (SiO₂) | 0-15 |
| Portlandite (Ca(OH)₂) | 0-15 |
| Ca-olivine (γ-C₂S) | 0-20 |
| Gehlenite (C₂AS) | 0-20 |
| Merwinite (C₃MS₂) | 0-30 |
| Periclase (MgO) | 0-10 |
| Perovskite | 0-10 |

Advantageously, as previously mentioned, according to an embodiment variant the composition involves the use of a mixture consisting of steel slag and calcium carbonate.

**In** this case, in the aforesaid mixture the ratio between steel slag mass and calcium carbonate mass is advantageously between 100:0 and 30:70, preferably between 95:5 and 40:60, more preferably between 80:20 and 50:50, even more preferably between 60:40 and 50:50.

**In** particular, the use of a mixture of steel slag and calcium carbonate instead of pure steel slag does not compromise the mechanical performance of the hydraulic binder. Advantageously, calcium carbonate has a grain size distribution that is substantially comparable to or smaller than the grain size distribution of slag.

Preferably, therefore, the calcium carbonate is ground to a D90 grain size of less than 150 µm, preferably less than 100 µm, more preferably less than 50 µm, even more preferably less than 20 µm.

Advantageously, the hydraulic binder composition is essentially completely free of Portland cement.

According to the idea underlying the present invention, the hydraulic binder composition comprises at least one modifier additive modifying the setting reaction of the steel slag, in a quantity between 0.1 and 20% by weight with respect to the weight of the steel slag, preferably between 0.1 and 10%, more preferably between 0.5 and 8%, even more preferably between 1 and 8%.

The term "setting reaction modifier additive" shall be understood to mean any additive capable of influencing the setting reaction of the reactive phases of steel slag when mixed with water.

In particular, it has been surprisingly discovered that, to obtain a hydraulic binder with mechanical properties comparable to those of Portland cement, it is possible, for example, to use an additive capable of increasing the setting time, or slowing down the time required for the phases to react.

More specifically, to obtain an increase in setting time that makes it possible to work the material and develop mechanical properties suitable for a hydraulic binder, it is extremely advantageous to modify the system during hydration, so as to cause the progressive precipitation of hydrates that remain stable over time, and that lead to good mechanical strength.

For example, the hydrates whose precipitation is to be promoted are hydrated calcium silicates of the tobermorite type, hydrated calcium aluminosilicates such as stratlingite, calcium aluminate sulphates, carbonates or hydroxides of the AFt (ettringite) and AFm (carboaluminate or hemicarboaluminate) type.

In accordance with the preferred embodiment of the present invention, the modifier additive comprises at least one selected from: a mineral additive, an organic additive, and mixtures thereof.

In accordance with a first embodiment, the modifier additive is a mineral additive. In accordance with this embodiment, the mineral additive is present in a quantity between 1 and 10% by weight with respect to the weight of said steel slag, preferably between 1 and 5%, more preferably between 1 and 3%, even more preferably between 2 and 3%.

In more detail, the mineral additive is at least one selected from: calcium sulphate; sodium sulphate; potassium sulphate or mixed sodium and potassium sulphates; sodium carbonate; mixed calcium and sodium carbonates; calcium hydroxide; sodium chloride or potassium chloride; and mixtures thereof.

Preferably, the mineral additive is selected from: calcium sulphate, sodium sulphate and sodium carbonate.

More preferably, the mineral additive with which the best performance can be achieved is selected from: calcium sulphate and sodium carbonate.

**In** particular, calcium sulphate can be in the form of gypsum, anhydrite or hemihydrate. Advantageously, the sodium sulphate can be anhydrous or decahydrate (Glauber's salt). **In** the case of using mixed sodium and potassium sulphates, the latter are advantageously present in the form of aphthylalite.

Advantageously, the sodium carbonate can also be anhydrous or dihydrated (trona).

In the case of using mixed calcium and sodium carbonates, the latter are advantageously present in the form of pyrissonite and gaylussite.

According to a second embodiment, the modifier additive is an organic additive. In accordance with this embodiment, the organic additive is present in a quantity between 0.1 and 10% by weight with respect to the weight of said steel slag, preferably between 0.1 and 5%, more preferably between 0.5 and 5%, even more preferably between 1 and 5%.

In particular, the organic additive is at least one selected from: a calcium complexing compound, an aluminum complexing compound and an aluminate ion complexing compound.

In more detail, the organic additive is at least one selected from the following classes of compounds: organic compounds and/or polymers containing at least one phosphonic group; organic compounds and/or polymers containing at least one carboxylic group; hydroxycarboxylic acids; monosaccharides and polysaccharides; amino acids and polypeptides; ethanolamines, and mixtures thereof.

For example, if the organic additive is an ethanolamine, it can be triethanolamine (TEA), diethanolamine (DEA).

Preferably, the organic additive is selected from: mixtures of mono- and polysaccharides, and mixtures of hydroxycarboxylic acids and ethanolamines.

More preferably, the organic additive with which the best performance can be achieved is selected from mixtures of mono- and polysaccharides.

According to a third embodiment, the modifier additive is a mixture of at least one mineral additive and at least one organic additive, for example among those indicated above.

In particular, the mixture of at least one mineral additive and at least one organic additive is present in a quantity between 0.1 and 20% by weight with respect to the weight of the steel slag, preferably between 0.1 and 10%, more preferably between 0.5 and 8%, even more preferably between 1 and 8%.

For this embodiment, what is described in the first embodiment and in the second embodiment applies and therefore will not be discussed further in detail below. Advantageously, the hydraulic binder composition, especially in powder form, is intended to be mixed with water to form a cohesive paste.

In particular, the ratio between hydraulic binder mass as formulated according to the present invention and water mass is between 0.3 and 0.6, preferably between 0.4 and 0.6, more preferably between 0.4 and 0.5.

Obviously, without departing from the scope of protection of the present invention, it is possible to add modifier additives, possibly in liquid form, directly into the water, instead of mixing them dry with the steel slag. In this case, the steel slag is mixed with the solution of water and modifier additive(s).

Some examples of composition embodiment examples with which samples were made and subjected to compressive strength tests and compared with a comparison example are illustrated below.

In particular, a Portland CEM I cement was considered as comparison example, whose mechanical strength and initial setting time are specified by the standard EN 197-1:2011. The values taken from the standard are reported in Table 3.

**Table 3 - CEM I cement strengths based on the class and setting time**

| **Strength class** | **Compressive strength [MPa]** | | | | **Initial setting time [min]** | **Seal (expansion) [mm]** |
|---|---|---|---|---|---|---|
| | **Initial strength** | | **Standard strength** | | | |
| | **2 days** | **7 days** | **28 days** | | | |
| 32.5 N | - | ≥ 16.0 | ≥ 32.5 | ≤ 52.5 | ≥ 75 | ≤ 10 |
| 32.5 R | ≥ 10.0 | - | | | | |
| 42.5 N | ≥ 10.0 | - | ≥ 42.5 | ≤ 62.5 | ≥ 60 | |
| 42.5 R | ≥ 20.0 | - | | | | |
| 52.5 N | ≥ 20.0 | - | ≥ 52.5 | - | ≥ 45 | |
| 52.5 R | ≥ 30.0 | - | | | | |

In accordance with a first embodiment example, the white steel ladle slag, deferrized and ground to the grain size indicated in Figure 1, was mixed in a quantity of 96.5% by weight with anhydrous sodium carbonate, ground to a comparable grain size, in a quantity of 3% by weight, sodium citrate, in a quantity of 0.25% by weight, and sodium tartrate, in a quantity of 0.25% by weight.

The hydraulic binder composition according to the first example was initially mixed with standard sand according to EN 196-1 in the weight ratio sand:binder 3:1 and was mixed with water in the water/binder ratio of 0.5 by weight, with a planetary mixer for 3 minutes.

Prismatic samples measuring 40x40x160 mm³ were made with the resulting paste. The latter were cured in a humid environment at 21± 2°C.

An initial setting time of 60 minutes was observed.

The samples were subjected to 2-day uniaxial compression tests, observing mechanical strengths of 8.4± 0.5 MPa.

Furthermore, a mineralogical composition consisting of hemicarboaluminate, hydrogranate, zeolite (levyne), calcite and unreacted calcium aluminates (mayenite and C ₃ A) and periclase was observed.

In accordance with a second embodiment, the white steel ladle slag, deferrized and ground to the grain size indicated in Figure 1, was mixed, in a quantity of 95% by weight, with gypsum (calcium sulphate dihydrate), ground to a comparable grain size, in a quantity of 3% by weight, and glucose, in a quantity of 2% by weight.

The hydraulic binder composition according to the second example was initially mixed with standard sand according to EN 196-1 in the weight ratio sand:binder 3:1 and was mixed with water in the water/binder ratio of 0.5 by weight, with a planetary mixer for 3 minutes.

Prismatic samples measuring 40x40x160 mm³ were made with the resulting paste. The latter were cured in a humid environment at 21± 2°C.

An initial setting time of 30 minutes was observed.

The samples were subjected to 2-day uniaxial compression tests, observing mechanical strengths of 6.3± 0.5 MPa.

Furthermore, a mineralogical composition consisting of ettringite, hydrogarnet and unreacted calcium aluminates (mayenite and C3A) and periclase was observed.

In accordance with a third embodiment, a mixture in a 50:50 weight ratio of white ladle steel slag, deferrized and ground to the grain size indicated in Figure 1, and calcium carbonate, ground to the grain size indicated in Figure 2, was mixed, in a quantity of 96.5% by weight, with sodium carbonate, ground to a comparable grain size, in a quantity of 1.5% by weight, sucrose, in a quantity of 1.5% by weight, and glucose, in a quantity of 0.5% by weight.

The hydraulic binder composition according to the third example was initially mixed with standard sand according to EN 196-1 in the weight ratio sand:binder 3:1 and was mixed with water in the water/binder ratio of 0.5 by weight, with a planetary mixer for 3 minutes.

Prismatic samples measuring 40x40x160 mm³ were made with the resulting paste. The latter were cured in a humid environment at 21± 2°C.

An initial setting time of 55 minutes was observed.

The samples were subjected to 2-day uniaxial compression tests, observing mechanical strengths of 25.4± 0.6 MPa.

Furthermore, a mineralogical composition consisting of hemicarbonate, calcium carbonate, unreacted calcium aluminates and periclase was observed.

In accordance with a fourth embodiment, the white steel ladle slag, deferrized and ground to the grain size indicated in Figure 1, was mixed, in a quantity of 93% by weight, with sodium carbonate, ground to a comparable grain size, in a quantity of 3% by weight, sucrose, in a quantity of 3% by weight, and glucose, in a quantity of 1% by weight.

The hydraulic binder composition according to the fourth example was initially mixed with standard sand according to EN 196-1 in the weight ratio sand:binder 3:1 and was mixed with water in the water/binder ratio of 0.5 by weight, with a planetary mixer for 3 minutes.

Prismatic samples measuring 40x40x160 mm³ were made with the resulting paste. The latter were cured in a humid environment at 21± 2°C.

An initial setting time of 115 minutes was observed.

The samples were subjected to 2-day uniaxial compression tests, observing mechanical strengths of 32.2±0.8 MPa.

Furthermore, a mineralogical composition consisting of calcium aluminum oxide hydroxide hydrate, hemicarbonate, hydrogranate, unreacted calcium aluminates and periclase was observed.

In accordance with a fifth embodiment, the white steel ladle slag, deferrized and ground to the grain size indicated in Figure 1, was mixed in a quantity of 96.5% by weight with gypsum, ground to a comparable grain size, in a quantity of 3% by weight, sodium tartrate, in a quantity of 0.25% by weight, and sodium citrate, in a quantity of 0.25% by weight.

The hydraulic binder composition according to the fifth example was initially mixed with standard sand according to EN 196-1 in the weight ratio sand:binder 3:1 and was mixed with water in the water/binder ratio of 0.5 by weight, with a planetary mixer for 3 minutes.

Prismatic samples measuring 40x40x160 mm³ were made with the resulting paste. The latter were cured in a humid environment at 21± 2°C.

An initial setting time of 55 minutes was observed.

The samples were subjected to 2-day uniaxial compression tests, observing mechanical strengths of 7.5± 0.5 MPa.

Furthermore, a mineralogical composition consisting of ettringite, hydrocalumite, hydrogarnet, unreacted calcium aluminates and periclase was observed.

Therefore, from the tests reported above, it is possible to note that the hydraulic binder obtained with the exemplary compositions in accordance with the invention advantageously develops resistances substantially comparable with Portland cements of class CEM I.

Therefore, the invention thus conceived achieves the pre-set objects.

## Claims

1. Hydraulic binder composition, which comprises:
- steel slag or a mixture consisting of steel slag and calcium carbonate;
- at least one modifier additive, modifying the setting reaction of said steel slag, in a quantity between 0.1 and 20% by weight with respect to the weight of the steel slag.

2. Hydraulic binder composition according to claim 1, **characterized in that** said modifier additive comprises at least one selected from: a mineral additive, an organic additive, and mixtures thereof.

3. Hydraulic binder composition according to claim 2, **characterized in that** said mineral additive is present in a quantity between 1 and 10% by weight with respect to the weight of said steel slag.

4. Hydraulic binder composition according to claim 2 or 3, **characterized in that** said mineral additive is at least one selected from: calcium sulphate; sodium sulphate; potassium sulphate or mixed sodium and potassium sulphates; sodium carbonate; mixed calcium and sodium carbonates; calcium hydroxide; sodium chloride or potassium chloride; and mixtures thereof.

5. Hydraulic binder composition according to any of claims 2 to 4, **characterized in that** said organic additive is present in a quantity between 0.1 and 10% by weight with respect to the weight of said steel slag.

6. Hydraulic binder composition according to any of claims 2 to 5, **characterized in that** said organic additive is at least one selected from: a calcium complexing compound, an aluminum complexing compound and an aluminate ion complexing compound.

7. Hydraulic binder composition according to any of claims 2 to 6, **characterized in that** said organic additive is at least one selected from the following classes of compounds: organic compounds and/or polymers containing at least one phosphonic group; organic compounds and/or polymers containing at least one carboxylic group; hydroxycarboxylic acids; monosaccharides and polysaccharides; amino acids and polypeptides; ethanolamines, and mixtures thereof.

8. Hydraulic binder composition according to any of the preceding claims, **characterized in that** said steel slag is ladle steel slag selected from: steel slag from the refining and deoxidation process of silicon-killed steel, steel slag from the refining and deoxidation process of aluminum-killed steel, and mixtures thereof.

9. Hydraulic binder composition according to any of the preceding claims, **characterized in that** it comprises said mixture consisting of steel slag and calcium carbonate, wherein in said mixture the ratio between the mass of steel slag and the mass of calcium carbonate is between 100:0 and 30:70.

10. Hydraulic binder composition according to any of the preceding claims, **characterized in that** said steel slag is deferrized and ground to a D90 grain size of less than 150 µm, preferably less than 100 µm.

11. Hydraulic binder composition according to any of the preceding claims, **characterized in that** it is substantially completely free of Portland cement.

12. Hydraulic binder composition according to any of the preceding claims, **characterized in that** said steel slag comprises a combination of calcium oxide (CaO), silicon oxide (SiO₂) and aluminum oxide (Al₂O₃), in a quantity greater than or equal to 60% with respect to the weight of the entire steel slag, preferably greater than or equal to 75%, more preferably between 85 and 90%.

13. Hydraulic binder composition according to any of the preceding claims, **characterized in that** the quantity of calcium oxide (CaO) present within said steel slag is greater than or equal to 30%, and preferably at least greater than or equal to 45%, with respect to the total weight of the steel slag.

14. Hydraulic binder composition according to any of the preceding claims, **characterized in that** the sum of the amount of calcium oxide (CaO) and one of silicon oxide (SiO₂) and aluminum oxide (Al₂O₃) is greater than or equal to 50%, and preferably greater than or equal to 70%.

15. Hydraulic binder composition according to any of the preceding claims, **characterized in that** it is in powder form and intended to be mixed with water to form a cohesive paste;
wherein the ratio of hydraulic binder mass to water mass is between 0.3 and 0.6, preferably between 0.4 and 0.6, more preferably between 0.4 and 0.5.
